# EUROPEAN PATENT SPECIFICATION

(11) **EP 2 766 181 B1**
(45) Date of publication and mention of the grant of the patent: **22.01.2020**
(21) Application number: 12759696.3
(22) Date of filing: 14.09.2012
(51) Int. Cl.: B32B 5/20, B32B 15/04, B32B 15/08, B32B 15/095, B32B 15/18, B32B 27/06, B32B 27/20, B32B 27/40, E04B 1/74, E04B 1/76, C08G 18/09, C08G 18/76, C08G 18/64, C08G 101/00, C08K 3/04, C08K 7/26, C08K 7/28, C09J 175/04, E04B 1/94

(54) **PANEL WITH FIRE BARRIER**
TAFEL MIT FEUERSCHUTZWAND
PANNEAU AVEC BARRIÈRE IGNIFUGE

(30) Priority: 12.10.2011 EP 11425251
(43) Date of publication of application: 20.08.2014
(60) Divisional application: 19194554.2
(73) Proprietor: Dow Global Technologies LLC, Midland, MI 48674 (US)
(72) Inventor: VAIRO, Giuseppe, I-42015 Correggio (IT); GUANDALINI, Maurizio, I-42011 Bagnolo In Piano (IT); LOTTI, Luca, I-42124 Reggio Emilia (IT); PIGNAGNOLI, Francesca, I-42100 Reggio Nell'emilia (IT); BERTUCELLI, Luigi, I-42100 Reggio Emilia (IT)
(74) Representative: Beck Greener LLP
(86) International application number: PCT/EP2012/068069
(87) International publication number: WO 2013/053566

(56) References cited:
- WO-A1-02/14397
- WO-A1-2006/010697
- WO-A1-2008/134803
- WO-A2-2004/026948
- US-A- 4 292 369
- US-A- 4 366 203
- US-A- 4 459 334
- US-A- 4 780 484

## Description

The invention relates to panels with fire barriers; and methods of forming such panels.

Rigid polymer foams provide good thermal insulation and are thus used in building components such as "sandwich" pre-insulated panels. Such panels typically include a rigid polyurethane/polyisocyanurate (PU/PIR) foam core bonded to metal facing layers, for example of steel or aluminium, or stressed skins of metal foil. Panels of this type are available for example from SAB-profiel™.

Such panels may be manufactured by a continuous process. A continuous lamination process typically uses a double belt/band arrangement wherein a liquid reaction mixture for forming a foamed polymer is deposited (poured or sprayed) onto a lower facing sheet, which may be flexible or rigid. An upper facing sheet is contacted with the polymer-forming mixture before it becomes cured and rigid. As an alternative ("inverse laminator"), the reaction mixture may be deposited onto the upper facing sheet. This process is discussed in "Polyurethane Handbook" (ed. Dr Guenter Oertel, Hanser Publishers 1985), US2005/02478993, US2007/0246160, WO2009/077490 and US4019938.

A thin layer of non-expanded or slightly expanded PU/PIR polymer formed from isocyanate and polyol is in some cases used to promote adhesion between the metal facing and the foam core. This thin layer is referred to as the "additional polyurethane/polyisocyanurate layer" (APL).

Lateral joints between panels are conventionally sealed with flexible foam gaskets.

Polymer foam core materials are typically combustible and leave little carbonaceous residue on burning. Thus, they provide only limited structural integrity under fire conditions. Structural integrity is important to prolong building stability and to maintain barriers to the passage of heat, smoke and fire.

The current fire resistance performance of metal faced sandwich panels, where the insulating layer is a PIR foam, is at best EI 60 on a 200 mm thick panel (where "EI" refers to integrity and insulation, and is followed by the number of minutes for which the component is effective). Reference standards are EN 1363-1/2 and EN 1364-1.

Attempts have been made to improve this performance, for example by incorporating flame retardant additives in the foam and by using incombustible thick facing materials (e.g. gypsum).

EP0891860 discloses a fire-resistant composite panel with a layer of intumescent mat (e.g. graphite based mineral fibre stabilized material) interposed between a core of rigid foamed plastics material and a metal outer layer. The mat is perforated with holes to permit bonding between the core and the metal layer.

The inventors have observed that when a typical sandwich panel is treated under furnace conditions, the steel facing quickly delaminates from the foam core and cracks appear in the foam.

In a first aspect, the invention provides a panel comprising:
- a metal facing;
- an insulating foam layer; and
at least one fire barrier layer between the metal facing and the foam layer, the fire barrier layer(s) comprising a dispersion of expandable graphite in a polyurethane/polyisocyanurate polymer matrix having isocyanate index 1.8 or more, wherein the fire barrier layer is 2 to 20 mm in thickness.

Preferably, the panel is self-supporting.

### Fire barrier Layer

The fire barrier layer(s) should provide good endurance of structural integrity and/or thermal barrier properties under fire conditions.

One, two, three or more fire barrier layer may be present. The structural integrity barrier and thermal barrier properties may be provided by separate layers (referred to as "structural integrity barrier layer" and "thermal barrier layer") or by the same layer. Where these properties are provided by the same layer, they may be provided by different materials or by the same material.

Preferably, the fire barrier layer has a thermal conductivity (k) of less than 0.1 W/mK.

Preferably, the fire barrier is 2 to 15 mm, e.g. 3 to 10 mm in thickness.

The fire barrier layer(s) is positioned between the foam core and the metal facing, and may conveniently be considered as a modified APL layer.

It is preferred for the fire barrier layer(s) to have good adhesive properties to the foam core and/or the metal facing. PU/PIR polymers provide good adhesive properties, and are used in the fire barrier layer(s) as discussed below. PU and PU/polyurea polymers also provide good adhesive properties and may additionally be used. Where a fire barrier layer does not have good adhesive properties, a separate adhesive may be used.

Preferably, the fire barrier layer is continuous and is continuously bonded to the metal facing and to the insulating foam layer.

Expandable graphite (also referred to as "exfoliating graphite") is used as a thermal barrier material in the fire barrier layer.

Expandable graphite is a particulate expandable under fire conditions. Preferably, the expandable graphite particles are of mean particle size 200 to 300 µm. The expandable graphite is dispersed in a polymer matrix.

The polymer matrix is a PU/PIR polymer. Such polymers may be formed from a polyol (e.g. a polyester polyol) and an isocyanate (e.g. an organic polyisocyanate such as a polymeric methylene diphenyl diisocyanate, PMDI, e.g. 2.7 functionality). A catalyst is used. An appropriate index is 1.8 or more. The term "index" refers to the isocyanate index, a measure of the number of equivalents of isocyanate-containing compound added compared to the theoretical number of equivalents of isocyanate-containing compound needed. A higher index indicates a higher amount of isocyanate-containing reactant. Preferred polyols include Voramer® polyols (from The Dow Chemical Company).

Suitable further fire barrier materials (i.e. materials for use in a further fire barrier layer) are discussed below under the headings "Structural integrity barrier material", "Thermal barrier material" and "Hybrid structural integrity barrier material and thermal barrier material" according to their properties.

### Structural integrity barrier material

As explained above, one or more structural integrity barrier materials may be included in a further fire barrier layer(s).

A structural integrity barrier material is intended to contribute to endurance of structural integrity in fire conditions. The suitability of a material to perform as structural integrity barrier material can be evaluated, for example, by placing a sample of the said material applied on a metal skin into a muffle heated with a temperature curve comparable to a fire resistance test and then verifying the absence of cracks and voids and checking for residual mechanical properties. The structural integrity barrier material preferably forms a coherent, strong char layer which will reduce the tendency of the underlying foam core to crack.

The structural integrity barrier material may include a particulate expandable under fire conditions.

Preferred structural integrity barrier materials for use in a further fire barrier layer(s) are discussed below.

### Ceramifying mixture of inorganic compounds in polymer matrix

A dispersion of a ceramifying mixture of inorganic compounds in a polymer matrix can be used as a structure integrity barrier material in a further fire barrier layer(s). Ceram Polymerik discloses such mixtures in WO2008134803, WO2005095545, WO2004088676 and WO2004035711.

The term "ceramifying composition" includes compositions which decompose and undergo chemical reaction under fire conditions to form a porous, self-supporting ceramic product. By contrast, conventional inorganic fillers remain as non-coherent particles under fire conditions.

Preferred mixtures include silicate minerals and inorganic phosphates. An additional inorganic filler and/or heat expandable material may be present. The ceramifying mixture may for example comprise some or all of aluminium trihydroxide, talc and ammonium polyphosphate. Examples of preferred mixtures include aluminium trihydroxide (ATH)/talc/ammonium polyphosphate (APP); talc/APP/zinc borate/expandable graphite. These materials react under fire conditions to form a coherent self-supporting ceramic once the activation temperature (typically within a range of 350 to 800 °C) is reached.

The polymer matrix is a PU/PIR polymer as discussed above.

In general, the polymer matrix may be a polyurethane (PU) polymer, but this is less preferred. Such polymers may be formed from a polyol (e.g. a polyether polyol) and an isocyanate (e.g. an organic polyisocyanate such as a low functional PMDI, e.g. 2.7 functionality). A catalyst is used.

They have an index 0.8 to 1.8. The polyols include Voranol® polyols (from The Dow Chemical Company).

Preferably, the ceramifying composition is present in an amount of 30 to 70 wt.% based on the total weight of the layer.

### Adhesive polyurethane/polyurea

An adhesive polyurethane/polyurea coating formed by reaction of sodium silicate aqueous solution (common name: water glass) with a hydrophilic prepolymer can be used as a structure integrity barrier material in a further fire barrier layer(s). The coating has been found to form a cohesive char under exposure to fire. WO2006010697 (Huntsman) relates to such waterglass based PU/polyurea coatings. Other fire barrier materials may be dispersed in the coating.

A preferred hydrophilic polyurethane pre-polymer is a Dow Hypol® class isocyanate.

### Glass Fibres

Glass fibres can be used as a structure integrity barrier material in a further fire barrier layer(s). Chopped glass fibres of length 5 mm to 75 mm and/or diameter 10 to 13 µm are preferred. Alternatives to glass fibres include rock fibres, basalt fibres and carbon fibres. The fibres are preferably dispersed in a polymer matrix, for example a polymer matrix of the type discussed under "Ceramifying mixture of inorganic compounds in polymer matrix" above.

### Thermal barrier material

As explained above, one or more thermal barrier materials may be included in a further fire barrier layer(s).

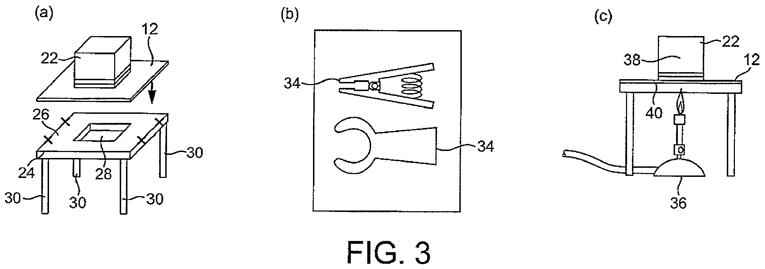

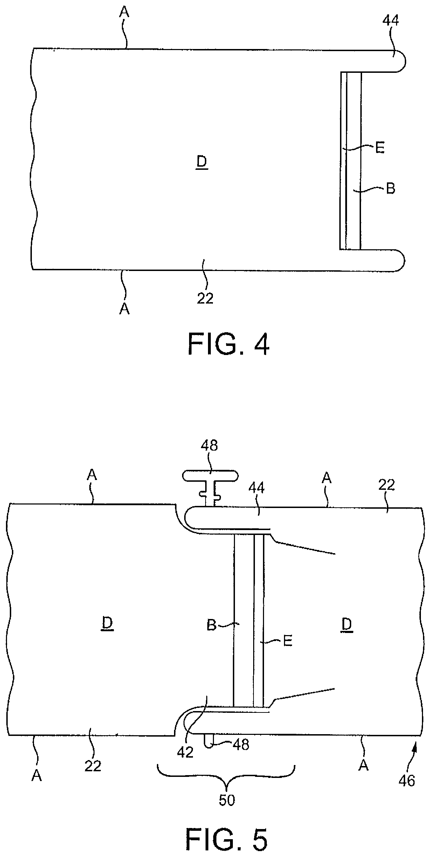

A thermal barrier material provides a temperature gradient in fire conditions. This is intended to improve the insulation performance during the fire resistance test. The suitability of a material to perform as thermal barrier material can be evaluated in a laboratory scale using the testing procedure described below and shown in Fig. 3 and evaluating the temperature increase measured with a thermocouple positioned at the interface between the thermal barrier material and the foam or alternatively positioned in the foam at a certain distance from the interface. Preferred thermal barrier materials are micro-voided or nano-voided materials, and are preferably porous. Suitable materials are discussed below.

### Porous silica

Porous silica can be used as a thermal barrier material in a further fire barrier layer(s).

A preferred form of porous silica is nanoporous silica and particularly silica aerogel. Silica aerogel is a very low density nanoporous solid derived from silica gel by replacing liquid with gas, e.g by supercritical drying. It strongly absorbs infrared radiation and has outstanding thermal insulation characteristics. Synthesis of silica aerogel particles is discussed in WO2008115812 and WO9850144 of Cabot.

Porous silica is preferably used dispersed in a polymer matrix. The polymer matrix may be pre-formed or may be formed *in situ.*

Pre-formed dispersions of nanoporous silica in polymer matrix are commercially available as "aerogel blankets" e.g. Cabot Thermal Wrap™. These can comprise granules of silica aerogel dispersed in non-woven polymer fibres e.g. of polyethylene and/or polyester. Thermal Wrap™ is a flexible, compressible, low-lambda material that can be easily cut with scissors to tailored dimensions.

Dispersions of nanoporous silica in a polymer matrix may be formed *in situ* using commercial silica aerogel powder. A commercial silica aerogel nanoporous powder is Cabot Nanogel™.

Preferably, the porous silica is dispersed in a hydrophilic polymer matrix. Pure silica aerogel has outstanding thermal insulation characteristics (low lamda values) because of its nanoporous structure. Silica aerogel is expected to lose its outstanding thermal insulation characteristics when used in a polymer matrix, because the polymer will fill the nanoporous structure. However, the present inventors have appreciated that hydrophilic polymers and aqueous solutions will not fill the pores because of the hydrophobicity of the nanoporous silica. Thus, hydrophilic polymers and aqueous compositions used to provide such polymers can be used to avoid filling the pores of the nanoporous silica contained in the thermal barrier layer.

An adhesive polyurethane/polyurea coating with structural integrity barrier properties of the type discussed above is particularly suitable. Alternatively, a PU/PIR or PU coating of the type discussed under "Ceramifying mixture of inorganic compounds in polymer matrix" above may be used.

WO2007047970 and WO9615998 relate to silica aerogel composites with an aqueous binding agent, and WO03097227, US2004077738, US2003215640 and EP1787716 relate to silica aerogel composites with hydrophilic binders. WO2007146945 (Aspen) relates to a PU/silica aerogel co-foam. WO2007086819 (Aspen) relates to a composite of poly(methyl methacrylate) (PMMA) and silica aerogel.

Preferably, the porous silica is present in an amount of 1 to 10 wt.% based on the total weight of the layer.

### Hybrid structural integrity barrier material and thermal barrier material

As mentioned above, the structural integrity barrier and thermal barrier properties may be provided by a single material. Preferred such materials are discussed below.

### Hollow glass microspheres

Hollow glass microspheres can be used as a hybrid structural integrity barrier material and thermal barrier material in a further fire barrier layer(s). Suitable materials are discussed in WO2010065724, and are commercially available e.g. S35 Glass Bubbles™ from 3M. The inventors have found that the particles form a cohesive, cellular char of amorphous silica under flaming conditions. The particles are preferably used in a polymer matrix, e.g. using one of the polymer materials discussed above.

Preferably, the hollow glass microspheres have an average diameter in the range of 10 to 120 µm.

Preferably, the hollow glass microspheres are present in an amount of 5 to 50 wt.% based on the total weight of the layer. In a preferred embodiment, a PU/PIR adhesive layer is filled with 20 wt.% S35 microspheres.

### Facing

As explained above, the panel includes a first metal facing. Typically, a second metal facing is included in the panel on the opposite face from the first metal facing. Each metal facing is preferably of steel or aluminium. Preferably, each metal facing is 0.2 to 1.2 mm in thickness.

### Foam Core

As explained above, the panel includes an insulating foam layer (also referred to as a foam core). Suitably, the foam core is rigid. Preferably, the foam core is 20 to 250 mm in thickness.

The foam core is preferably of PU/PIR. Preferred foams are formed from polyol (added with a blowing agent and a catalyst) and an isocyanate (e.g. an organic polyisocyanate such as high functional PMDI). A preferred index is 1.8 or more. Preferred polyols include Voratherm® polyols (from The Dow Chemical Company) which provide foams with good fire performance properties.

### Manufacturing Process

In a second aspect, the invention provides a method of forming a panel as described above, comprising the steps of:
- providing a first metal facing with at least one fire barrier layer;
- applying an insulating foam layer in the form of a liquid reaction mixture to the fire barrier layer(s); and
- applying a second metal facing to the insulating foam layer.

The fire barrier layer(s) may be provided in liquid form, and preferably at least one fire barrier layer is applied in the form of a liquid reaction mixture (containing dispersed material) which will form a polymer matrix. Preferably, the liquid reaction mixture is an isocyanate-based reaction mixture, more preferably a dispersion in an isocyanate-based reaction mixture of expandable graphite.

Additionally or alternatively, at least one fire barrier layer (e.g. a dispersion of porous silica in a pre-formed polymer matrix) is applied in solid form. The fire barrier layer in solid form may be secured with an adhesive composition. However, if a previous fire barrier layer has been applied in liquid form an adhesive composition may not be necessary.

Panels in accordance with the invention may be manufactured in a continuous or discontinuous process.

Suitably, a PU/PIR adhesive is used and is applied in liquid form.

A discontinuous process using moulds may be used. In such a method, the metal facings are suitably positioned in a mould (preferably a heated mould) and the reaction mixture for forming the insulating form layer injected (e.g. using a foaming machine) so as to fill the mould and adhere to the metal facings. The fire barrier layer(s) may be added before the metal facings are positioned in the mould or while the metal facings are in the mould.

Where there is more than one fire barrier layer, the layers may be formed in any order on the metal facing. However, it is preferably to have a thermal barrier material adjacent to the foam core.

Features described in connection with any aspect of the invention can be used in combination with any other aspect of the invention.

### Figures

Fig. 1 shows a perspective view of a panel according to a first preferred embodiment of the invention. The layers, which may not all be present, are in order: metal facing A; fire barrier layer (1) B; fire barrier layer (2) C; insulating foam D; metal facing A.
Fig. 2 shows the method of manufacture of the panel of Fig. 1. Fig. 2(a) shows a cross-section through a mould. Fig 2(b) shows a plan view of the mould of Fig. 2(a). Fig. (c) shows a panel formed using the mould of Figs. 2(a) and 2(b).
Fig. 3 shows a method of testing fire resistance properties of the panel of Fig. 1. Fig. 3(a) shows a perspective view of the apparatus and panel. Fig. 3(b) shows the clips used in the apparatus of Fig. 3(a). Fig. 3(c) shows a side view of the apparatus and panel of Fig. 3(a) during testing.

### Examples

The invention will be further described with reference to the following non-limiting examples.

### Materials

### Polyurethane / Polyisocyanurate Foam Core

A bi-component system comprising (A) a polyol including a blowing agent and a catalyst and (B) a polymeric isocyanate PMDI is used for the foam core. Voratherm® CN 604 polyol (A) is reacted with a high functional PMDI (B) at index 2.85. Voratherm® CN 604 is a commercial product of The Dow Chemical Company.

### Polyurethane / Polyisocyanurate Adhesive Layer

A bi-component system comprising (A) a polyol added with a catalyst and (B) a polymeric isocyanate PMDI is used for fire barrier layer(s). Voramer® MB 3171 polyol (A) is reacted with a 2.7 functionality PMDI (B) at index 2.00. Voramer® MB 3171 is a commercial product of The Dow Chemical Company.

### Polyurethane Adhesive Layer

A bi-component system comprising (A) a polyol (B) a polymeric isocyanate PMDI is used for fire barrier layer(s). Voranol® CP 450 polyol (A) is reacted with a 2.7 functionality PMDI (B) at index 1.00. Voranol® CP 450 is a commercial product of The Dow Chemical Company.

### Polyurethane / Polyurea Adhesive Layer

A polyurethane/polyurea adhesive coating is obtained by reacting (A) a sodium silicate solution in water (common name: water glass) and (B) an isocyanate-capped polyurethane (prepolymer). As the (A) part a 37 wt.% sodium silicate solution in water from Sigma-Aldrich Inc. is used; as the (B) part Hypol® JM 5002 prepolymer is used. Hypol® JM 5002 is a commercial product by The Dow Chemical Company.

### Filler: Ceramifying composition

A blend of inorganic minerals known to undergo sintering at high temperature (commercial name: Ceram Polymerik FM3H®) is purchased from Ceram Polymerik Ltd. The material, a white, fine powder, is used as received and without any further purification. It is believed to contain ATH/talc/APP.

### Filler: Kaolin powder

Kaolin (anhydrous aluminum silicate, Al₂Si₂O₅(OH)₄) powder (average particle size 3.8 µm) is purchased from READE® Advanced Materials. The material is used without any further purification.

### Filler: Portland Cement

Portland Cement (commercial name: Laterlite® Leca CS 1600) is purchased from Laterlite S.p.A. (Milan) and used without any further purification.

### Filler: silica aerogel powder

A powdered silica aerogel (commercial name: Cabot Nanogel® TLD102) is purchased from Cabot Corporation and used without any further purification. The used grade shows relatively broad-size granules (up to 1.2 mm in diameter) having an average density of 80-90 kg/m³.

### Filler: Glass Bubbles

Hollow glass microspheres are purchased from 3M company. The spheres are commercially available under the trade name of 3M Glass Bubbles S35™; their density is 350 kg/m³.

### Filler: expandable graphite

Expandable graphite is obtained from Nordmann Rassmann. The product is commercially available under the trade name of Nord-min® KP 251. It has a mean particle size of 250 µm.

### Filler: glass fibres

Chopped glass fibres (25 mm long and 12 µm in diameter) are obtained from Hainan Fuwang Industrial Co. Ltd of China.

### Blanket: Silica aerogel Blanket

A commercial silica aerogel blanket (commercial name: Cabot Thermal Wrap®; thickness: 6 mm) is purchased from Cabot Corporation and used without any treatment. The blanket consists of Nanogel® granules within non-woven fibres of polyethylene and polyester.

### Blanket: Mineral Wool Blanket

A commercial mineral wool blanket (commercial name: Rockwool® 234; thickness: 20 mm) is purchased from Rockwool Italia S.p.A. and used without any treatment.

### Procedures

### Mould setup

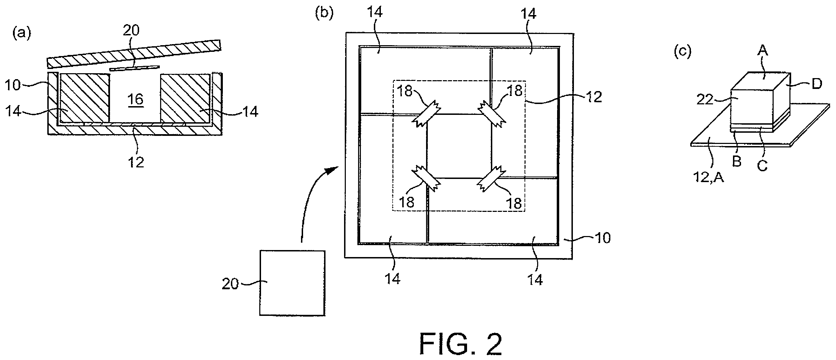

The mould arrangement is shown in Figs. 2(a) and 2(b).

In an aluminium mould 10 (30 x 30 x 10 cm) having walls thermostatically maintained at 50 °C, a 20 x 20 cm steel plate 12 (thickness 0.4 mm; lower steel facing) is centered at ∼5 cm from the mould walls. Four 20 x 10 x 10 cm aluminium spacers 14 are placed on the top of the steel plate 12 and all along the mould borders; a central 10 x 10 x 10 cm hole 16 remains in the mould 10.

Four strips of commercially available adhesive tape 18 are attached parallel to the steel plate 12 at 45 ° to the edges of the aluminium mould 10 at the upper corners of the central hole 16. Another 10 x 10 cm steel plate 20 (thickness 0.4 mm; upper steel facing) is placed on the taped corners to close the mould 10.

After 1 hour the temperature of the spacers 14 is checked with a thermocouple; the mould 10 is then closed again until the temperature reaches 50 °C. When this temperature is reached, the mould 10 is opened and the upper steel facing 20 is temporarily removed for foam pouring.

### Production of small-scale panels

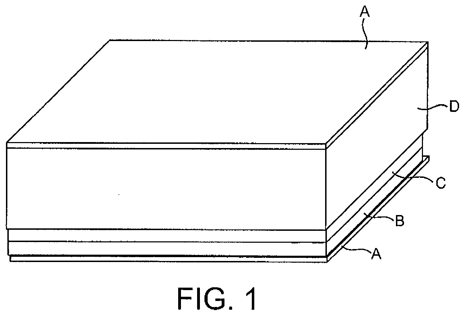

Fig. 1 shows a small-scale panel in accordance with the Examples. Fig. 2 summarises the production process.

The fire barrier layer(s) and the foam core are prepared in the mould. To form the first fire barrier layer B (structural integrity barrier layer or combined structural integrity barrier and thermal barrier layer), the polyol or water glass composition is obtained by hand mixing the components; after the addition of the isocyanate, 40 g of the reaction mixture is quickly poured into the central hole 16 in the mould 10 on top of the lower steel facing 12/A.

Where a second fire barrier layer C (thermal barrier layer) is to be formed from a liquid reaction mixture, it is prepared in the same way. 40 g of the reaction mixture is poured on top of the first fire barrier layer B in the central hole 16 in the mould 10 no more than 20 s after the pouring of the first fire barrier layer. Alternatively, where a blanket (silica aerogel blanket or mineral wool blanket) is used as the second fire barrier layer, it is gently placed on the top of the first fire barrier layer no more than 20 s after pouring.

The PU/PIR foam layer D is prepared by hand mixing the components, and pouring the reaction mixture on the top of the fire barrier layer(s). Where the upper fire barrier layer is poured, this should be done within 20 s of pouring.

After pouring of the foam composition, the upper steel facing 20/A is quickly positioned, and the mould 10 is closed before the PU/PIR foam reaches the upper steel facing 20/A.

After 10 minutes of reaction, the mould 10 is open and the small-scale panel 22 is removed from the mould (Fig. 2(c)).

### Characterisation of fire resistance properties of the small-scale panels

This process is summarised in Fig. 3.

A small-scale panel 22 is supported on a steel frame 24 (Fig. 3(a)). The frame 24 is in the form of a square platform 26 of size 20 cm x 20 cm, with a central 10 cm x 10 cm hole 28, supported on a leg 30 of height 20 cm at each corner. The panel 22 is clipped using at least four metal clips 34 (Fig. 3(b)) to the steel frame (at points "X") so that the panel 22 is aligned with the hole 28 in the platform 26. A Bunsen burner 36 is placed under the centre of the lower steel facing 12 (Fig. 3(c)). A first needle thermocouple 38 is positioned in the centre of the panel 22 (i.e. at 5 cm from each face). A second needle thermocouple 40 is contacted with the centre of the lower steel facing 12 and used to verify that the same temperature is reached in all experiments. The temperature over time is monitored from the beginning of the flaming.

Damage is measured at the end of the trial as damaged height. The small-scale test is used to provide indicative results.

### Creation of panels for medium-scale fire resistance test

60 x 60 x 8 cm sized metal faced sandwich elements are produced. The fire barrier layer(s) are distributed on metal facings using a low pressure foaming machine combined with an air spray mixing head device. The metal facings are then placed in a mould. The PIR reaction mixture is injected into the heated mould using a high pressure foaming machine.

### Characterization of fire resistance properties in the medium-scale test

The 60 x 60 cm sandwich panels are tested using a furnace capable of following the temperature/time curve of the EN 1363-1 standard. The temperature on the "cold" side of the sandwich is recorded vs. time in the central position of the surface. The results from the medium-scale test are more reliable than those from the small-scale test.

### Examples

### Example 1 - Structural integrity barrier layer

Example 1-1 (comparative): a multilayer sandwich panel as in Fig. 1, where layer B is a polyurethane / polyisocyanurate adhesive layer obtained by reacting Voramer® MB 3171 filled with the ceramifying composition Ceram Polymerik FM3H® (50 wt.% of the overall composition i.e. layer B as a whole) with a 2.7 functionality PMDI. No C layer is present. Layer D is Voratherm® CN 604-based foam.
Comparative Example 1-2: a sandwich panel as in Fig. 1. Layer D is Voratherm® CN 604 polyurethane / polyisocyanurate foam, no fire barriers B or C.
Comparative Example 1-3: a multilayer sandwich panel as in Fig. 1, where layer B is a polyurethane / polyisocyanurate adhesive layer obtained by reacting Voramer MB 3171 polyol with PMDI isocyanate. No C layer is present. Layer D is Voratherm® CN 604-based foam.
Comparative example 1-4: a multilayer sandwich panel as in Fig. 1, where layer B is a polyurethane / polyisocyanurate adhesive layer obtained by reacting Voramer® MB 3171 filled with kaolin (31 wt.% of the overall composition i.e. layer B as a whole) with a 2.7 functionality PMDI. No C layer is present. Layer D is Voratherm® CN 604-based foam.
Comparative Example 1-5: a multilayer sandwich panel as in Fig. 1, where layer B is a polyurethane / polyisocyanurate adhesive layer obtained by reacting Voramer® MB 3171 filled with Portland Cement (31 wt.% of the overall composition i.e. layer B as a whole) with a 2.7 functionality PMDI. No C layer is present. Layer D is Voratherm® CN 604-based foam.
Comparative Example 1-6: a multilayer sandwich panel as in Fig. 1, where layer B is a polyurethane / polyurea adhesive layer obtained by reacting an isocyanate prepolymer (Hypol® JM 5002) with waterglass (sodium silicate solution 37.1 wt.% in water). No C layer is present. Layer D is Voratherm® CN 604-based foam.
Example 1-7 (comparative): a multilayer sandwich panel as in Fig. 1, where layer B is a polyurethane / polyisocyanurate adhesive layer obtained by reacting Voramer® MB 3171 filled with chopped glass fibres (25 mm long) (10 wt.% of the overall composition i.e. layer B as a whole) with a 2.7 functionality PMDI. No C layer is present. Layer D is Voratherm® CN 604-based foam.

### Example 2 - Thermal barrier layer

Example 2-1 (comparative): a multilayer sandwich panel as in Fig. 1, where layer B is a polyurethane / polyisocyanurate adhesive layer obtained by reacting Voramer® MB 3171 filled with hollow silica microspheres 3M S35 (18 wt.% of the overall composition i.e. layer B as a whole), with a 2.7 functionality PMDI. No layer C is present. Layer D is Voratherm® CN 604-based foam.
Example 2-2 (comparative): a multilayer sandwich panel as in Fig. 1, where layer B is a polyurethane / polyisocyanurate adhesive layer obtained by reacting a polyol carrying silica aerogel and isocyanate. As the polyol, Voramer® MB 3171 filled with micrometric particles of Cabot Nanogel® is used. The silica aerogel content with respect to the dispersed composition (layer B as a whole) is 4.3 wt.%. As an isocyanate, a 2.7 functionality PMDI is used. No layer C is present. Layer D is Voratherm® CN 604-based foam.
Example 2-3 (comparative): a multilayer sandwich panel as in Fig. 1, where layer B is a polyurethane adhesive layer obtained by reacting a polyol carrying silica aerogel and isocyanate. As a polyol, Voranol® CP 450 filled with micrometric particles of Cabot Nanogel® is used. The silica aerogel content with respect to the dispersed composition (layer B as a whole) is 3.8 wt.%. As an isocyanate, a 2.7 functionality PMDI is used. No layer C is present. Layer D is Voratherm® CN 604-based foam.
Example 2-4 (comparative): a multilayer sandwich panel as in Fig. 1, where layer B is a polyurethane / polyisocyanurate adhesive layer obtained by reacting of Voramer MB 3171 polyol with PMDI isocyanate. Layer C is a 100 x 100 x 6 mm Thermal Wrap® silica aerogel blanket. Layer D is Voratherm® CN 604-based foam.
Example 2-5 (comparative): a multilayer sandwich panel as in Fig. 1, where layer B is a polyurethane / polyisocyanurate adhesive layer obtained by reacting Voramer® MB 3171 filled with the ceramifying composition Ceram Polymerik FM3H® (50 wt.% of the overall composition i.e. layer B as a whole) with a 2.7 functionality PMDI. Layer C is a 100 x 100 x 6 mm Thermal Wrap® silica aerogel blanket. Layer D is Voratherm® CN 604-based foam.
Example 2-6 (example of the invention): a multilayer sandwich panel as in Fig. 1, where layer B is a polyurethane / polyisocyanurate adhesive layer obtained by reacting Voramer® MB 3171 filled with expandable graphite (10 wt.% of the overall composition i.e. layer B as a whole) with a 2.7 functionality PMDI. No C layer is present. Layer D is Voratherm® CN 604-based foam.
Comparative Example 2-7: a multilayer sandwich panel as in Fig. 1, where layer B is a polyurethane / polyisocyanurate adhesive layer obtained by reacting Voramer® MB 3171 polyol with PMDI isocyanate. Layer C is a 100 x 100 x 20 mm Rockwool® 234-grade mineral wool blanket. Layer D is Voratherm® CN 604-based foam.

### Example 3 - Combined structural integrity barrier layer and thermal barrier layer

Example 3-1 (comparative): a multilayer sandwich panel as in Fig. 1, where layer B is a PU/PIR adhesive layer obtained by reacting Voramer® MB 3171 filled with both the ceramifying composition Ceram Polymerik FM3H® (40 wt.% of the overall composition i.e. layer B as a whole) and the hollow silica microspheres (11 wt.% of the overall composition i.e. layer B as a whole) with a low functional PMDI. No C layer is present. Layer D is Voratherm® CN 604-based foam.
Example 3-2 (comparative): a multilayer sandwich panel as in Fig. 1, where layer B is a PU/polyurea polymer layer obtained by reacting an isocyanate prepolymer (Hypol® JM 5002) with a waterglass (sodium silicate solution 37.1 wt.% in water) dispersion of micrometric particles of Cabot Nanogel® silica aerogel and a surfactant commercially available under the name of Pluronic P105. The silica aerogel content with respect to the dispersed composition (layer B as a whole) is 4 wt.%, while the surfactant is 1.6 wt.%. No C layer is present. Layer D is Voratherm® CN 604-based foam.
Example 3-3 (comparative): a multilayer sandwich panel as in Figure 1, where layer B is a PU/PIR adhesive layer obtained by reacting Voramer® MB 3171 filled with hollow glass microspheres 3M S35™ (18 wt.% of the overall composition i.e. layer B as a whole), with a 2.7 functionality PMDI. Layer C is a 100 x 100 x 6 mm Thermal Wrap® silica aerogel blanket. Layer D is Voratherm® CN 604-based foam.

The composition of the panels tested is reported in Table 1 (Example 1) and Table 2 (Examples 2 and 3).

**TABLE 1**

| | Example 1-1 (comparative) | Comp. Ex. 1-2 | Comp. Ex. 1-3 | Comp. Ex. 1-4 | Comp. Ex. 1-5 | Comp. Ex. 1-6 | Ex. 1-7 (comparative) |
|---|---|---|---|---|---|---|---|
| **PIR foam composition (parts by weight)** | | | | | | | |
| Voratherm® CN 604 polyol | 100 | 100 | 100 | 100 | 100 | 100 | 100 |
| Voracor® CM 611 Catalyst | 4 | 4 | 4 | 4 | 4 | 4 | 4 |
| Voranate® M 600 PMDI Isocyanate | 171 | 171 | 171 | 171 | 171 | 171 | 171 |
| n-pentane | 12 | 12 | 12 | 12 | 12 | 12 | 12 |

| **Fire Barrier composition (parts by weight)** | | | | | | | |
|---|---|---|---|---|---|---|---|
| Voramer® MB 3171 polyol | 100 | | 100 | 100 | 100 | | 100 |
| Ceram Polymerik® FM3H | 223 | | | | | | |
| Kaolin | | | | 100 | | | |
| Portland Cement | | | | | 100 | | |
| Chopped glass fibres | | | | | | | 25 |
| Waterglass | | | | | | 100 | |
| Hypol® JM 5002 Isocyanate | | | | | | 47 | |
| Voranate® M 220 PMDI Isocyanate | 123 | | 123 | 123 | 123 | | 123 |
| **Amount of additive in reactant (wt. %)** | 69 | | | 50 | 50 | | |
| **Amount of additive in fire barrier composition (wt. %)** | 50 | | | 31 | 31 | | |

**TABLE 2**

| | Ex. 2-1 (comp) | Ex. 2-2 (comp) | Ex. 2-3 (comp) | Ex. 2-4 (comp) | Ex. 2-5 (comp) | Ex. 2-6 (example of the invention) | Comp. Ex. 2-7 | Ex. 3-1 (comp) | Ex. 3-2 (comp) | Ex. 3-3 (comp) |
|---|---|---|---|---|---|---|---|---|---|---|
| **PIR foam composition (parts by weight)** | | | | | | | | | | |
| Voratherm® CN 604 polyol | 100 | 100 | 100 | 100 | 100 | 100 | 100 | 100 | 100 | 100 |
| Voracor® CM 611 Catalyst | 4 | 4 | 4 | 4 | 4 | 4 | 4 | 4 | 4 | 4 |
| Voranate® M 600 PMDI Isocyanate | 171 | 171 | 171 | 171 | 171 | 171 | 171 | 171 | 171 | 171 |
| n-pentane | 12 | 12 | 12 | 12 | 12 | 12 | 12 | 12 | 12 | 12 |

| **Fire Barrier composition (parts by weight)** | | | | | | | | | | |
|---|---|---|---|---|---|---|---|---|---|---|
| Voramer® MB 3171 polyol | 100 | 100 | | 100 | 100 | 100 | 100 | 100 | | 100 |
| Voranol® CP 450 polyol | | | 100 | | | | | | | |
| Ceram Polymerik® FM3H | | | | | 223 | | | 180 | | |
| 3M Silica Hollow Microspheres | 50 | | | | | | | 50 | | 50 |
| Cabot® Nanogel | | 10 | 10 | | | | | | 6.25 | |
| Expandable graphite | | | | | | 25 | | | | |
| Pluronic P105 | | | | | | | | | 2.5 | |
| Waterglass | | | | | | | | | 100 | |
| Hypol® JM 5002 Isocyanate | | | | | | | | | 47 | |
| Voranate® M 220 PMDI Isocyanate | 123 | 123 | 150 | 123 | 123 | 123 | 123 | 123 | | 123 |
| Thermal Wrap® Silica aerogel Blanket | | | | Yes | Yes | | | | | Yes |
| Mineral Wool Blanket | | | | | | | Yes | | | |
| **Amount of additive in reagent (wt.%)** | 33 | 9 | 9 | | 69 | 20 | | 54.5 (ceram) 15.1 (hollow silica microspheres) | 5.7 | 33 |
| **Amount of additive in fire barrier composition (wt. %)** | 18 | 4.3 | 3.8 | | 50 | 10 | | 40 (ceram) 11 (hollow silica microspheres) | 4 | 18 |

### Results of Examples 1 to 3 and Discussion

The internal temperatures of the samples after 15 and 30 minutes of flaming in the small-scale fire test, along with the height of the internal damage after cutting the foam, are reported in Table 3 (Example 1) and Table 4 (Examples 2 and 3) .

The internal temperatures provide an indication of thermal barrier properties. The damage height provides an indication of structural integrity barrier properties. In the case of each of these variables, low values are desirable.

The small-scale fire test involves severe conditions because the testing thermocouple is only 5 cm from the flame source. Therefore, the fire barrier effect does not apply for as long as 30 minutes.

**TABLE 3**

| Sample | Temperature after 15 min (°C) | Temperature after 30 min (°C) | Damage height (mm) |
|---|---|---|---|
| Ex. 1-1 (comp) | 73 | 214 | 62 |
| Comparative Ex. 1-2 | 129 | 200 | 62 |
| Comparative Ex. 1-3 | 108 | 210 | 63 |
| Comparative Ex. 1-4 | 97 | 219 | 66 |
| Comparative Ex. 1-5 | 92 | 236 | 65 |
| Comparative Ex. 1-6 | 77 | 191 | 64 |
| Example 1-7 (comp) | 69 | 206 | Not measured |

**TABLE 4**

| Sample | Temperature after 15 min (°C) | Temperature after 30 min (°C) | Damage height (mm) |
|---|---|---|---|
| Example 2-1 (comp) | 68 | 204 | 61 |
| Example 2-2 (comp) | 95 | 209 | 64 |
| Example 2-3 (comp) | 117 | 216 | 68 |
| Example 2-4 (comp) | 69 | 233 | 64 |
| Example 2-5 (comp) | 49 | 156 | 60 |
| Comp. Example 2-7 | 107 | 245 | 70 |
| Example 3-1 (comp) | 46 | 186 | 61 |
| Example 3-2 (comp) | 49 | 140 | 55 |
| Example 3-3 (comp) | 55 | 160 | 56 |

The temperature on the "cold" side of the sandwich exposed to the medium-scale fire resistance test after 15, 30 and 40 minutes is reported in Table 5 (Example 1-1, Comparative Example 1-2, Examples 2-1 and 2-2).

**TABLE 5**

| Sample | Temperature after 15 min (°C) | Temperature after 30 min (°C) | Temperature after 40 min (°C) |
|---|---|---|---|
| Example 1-1 (comp) | 30 | 78 | 144 |
| Comparative Ex. 1-2 | 42 | 108 | 198 |
| Example 2-1 (comp) | 41 | 60 | 103 |
| Example 2-2 (comp) | 36 | 62 | 99 |
| Example 2-6 (example of the invention) | 45 | 66 | 103 |

From Tables 3 and 4 it can be seen that where both structural integrity barrier and thermal barrier materials (hybrid or separate) are present (Examples 2-1, 2-5 and 3 - all comparative), very good results are achieved in the small-scale fire test. Temperatures after 15 minutes are in the range of 46 to 69 °C. Damage height (where measured) is in the range of 55 to 61 mm. This is compared with a temperature after 15 minutes of 108 °C and a damage height of 63 mm for the control with an unmodified APL (Comparative Example 1-3).

From Table 3 it can also be seen that a fire barrier including a dispersion of ceramifying composition in PU/PIR as the structural integrity barrier material gave the lowest damage height (62 mm) and gave a lower temperature after 15 minutes (73 °C) than fire barriers using kaolin or Portland cement (Example 1-1, comparative, and Comparative Examples 1-4 and 1-5). A low temperature after 15 minutes (69 °C) was also achieved using a fire barrier including a dispersion of chopped glass fibres in PU/PIR as the structural integrity barrier material. Kaolin and Portland cement are used as fillers in WO2006010697.

From Table 4 it can also be seen that the use of a silica aerogel blanket gave a lower damage height (64 mm) and gave a lower temperature after 15 minutes (69 °C) compared with the use of a mineral wool blanket (Example 2-4, comparative, and Comparative Example 2-7).

From Table 5 it can be seen that hollow silica microspheres (Example 2-1, comparative), aerogel (Example 2-2, comparative) and a dispersion of expandable graphite in PU/PIR (Example 2-6, example of the invention) provided good performance in the medium-scale fire test. Results at 15 minutes in the medium-scale fire test are less significant than those at 30 and 40 minutes. The Example 2-1 (comparative) fire barrier was found to delay the insulation failure by about 20 minutes, leading to I=55 performance (EN test referred to above). Observations of the burnt panels showed a dense, coherent char on the exposed side, with cracks of reduced depth in the PIR foam beneath.

The panels of the preferred embodiments of the invention make use of a multilayer-multifunction concept to combine structural integrity barrier and thermal barrier properties. Very good fire resistance properties are achieved.
Moreover, the panels of the preferred embodiments of the invention are easy to manufacture. This is an improvement compared with WO2006010697, where the waterglass chemistry is difficult to use in a continuous production process because of lack of adhesion between the waterglass-based and metal layers. The use of PU/PIR in the fire barriers of embodiments of the invention allows good adhesion to the metal facing and to the PIR foam core.

Whilst the invention has been described with reference to the illustrated preferred embodiments and the Examples, the skilled person will appreciate that various modifications are possible within the scope of the claims.

## Claims

1. A panel (22) comprising:
- a metal facing (12, A);
- an insulating foam layer (D); and
at least one fire barrier layer (B, C) between the metal facing (12, A) and the foam layer (D), the fire barrier layer(s) (B, C) comprising a dispersion of expandable graphite in a polyurethane/polyisocyanurate polymer matrix having isocyanate index 1.8 or more, wherein the fire barrier layer (B, C) is 2 to 20 mm in thickness.

2. A panel (22) as claimed in Claim 1, wherein the fire barrier layer (B, C) is continuous and is continuously bonded to the metal facing (12, A) and to the insulating foam layer (D).

3. A method of forming a panel (22) as claimed in either one of the preceding claims, comprising the steps of:
- providing a first metal facing (12, A) with at least one fire barrier layer (B, C);
- applying an insulating foam layer (D) in the form of a liquid reaction mixture to the fire barrier layer(s) (B, C); and
- applying a second metal facing (20, A) to the insulating foam layer (D).

4. A method as claimed in Claim 3, wherein at least one fire barrier layer (B, C): (a) is applied in the form of a liquid reaction mixture, or (b) is applied in solid form.

5. A method as claimed in Claim 4(a), wherein the liquid reaction mixture comprises a dispersion in an isocyanate-based reaction mixture of expandable graphite.

## Patentansprüche

1. Eine Platte (22), die Folgendes beinhaltet:
- eine Metallaußenschicht (12, A);
- eine isolierende Schaumstoffschicht (D); und
mindestens eine Flammbarriereschicht (B, C) zwischen der Metallaußenschicht (12, A) und der Schaumstoffschicht (D), wobei die Flammbarriereschicht(en) (B, C) eine Dispersion expandierbaren Graphits in einer Polyurethan/Polyisocyanurat-Polymermatrix mit einem Isocyanatindex von 1,8 oder mehr beinhaltet/beinhalten, wobei die Flammbarriereschicht (B, C) eine Dicke von 2 bis 20 mm aufweist.

2. Platte (22) gemäß Anspruch 1, wobei die Flammbarriereschicht (B, C) kontinuierlich ist und kontinuierlich an die Metallaußenschicht (12, A) und an die isolierende Schaumstoffschicht (D) gebunden ist.

3. Ein Verfahren zum Formen einer Platte (22) gemäß einem der vorhergehenden Ansprüche, das die folgenden Schritte beinhaltet:
- Bereitstellen einer ersten Metallaußenschicht (12, A) mit mindestens einer Flammbarriereschicht (B, C);
- Auftragen einer isolierenden Schaumstoffschicht (D) in Form einer flüssigen Reaktionsmischung auf die Flammbarriereschicht(en) (B, C); und
- Auftragen einer zweiten Metallaußenschicht (20, A) auf die isolierende Schaumstoffschicht (D).

4. Verfahren gemäß Anspruch 3, wobei mindestens eine Flammbarriereschicht (B, C) (a) in Form einer flüssigen Reaktionsmischung aufgetragen wird oder (b) in fester Form aufgetragen wird.

5. Verfahren gemäß Anspruch 4(a), wobei die flüssige Reaktionsmischung eine Dispersion expandierbaren Graphits in einer isocyanatbasierten Reaktionsmischung beinhaltet.

## Revendications

1. Un panneau (22) comprenant :
- un revêtement en métal (12, A) ;
- une couche de mousse isolante (D) ; et
au moins une couche coupe-feu (B, C) entre le revêtement en métal (12, A) et la couche de mousse (D), la ou les couches coupe-feu (B, C) comprenant une dispersion de graphite expansible dans une matrice polymère de polyuréthane/polyisocyanurate ayant un indice isocyanate de 1,8 ou plus, dans lequel la couche coupe-feu (B, C) fait de 2 à 20 mm d'épaisseur.

2. Un panneau (22) tel que revendiqué dans la revendication 1, dans lequel la couche coupe-feu (B, C) est continue et est liée de manière continue au revêtement en métal (12, A) et à la couche de mousse isolante (D).

3. Un procédé de formation d'un panneau (22) tel que revendiqué dans l'une ou l'autre des revendications précédentes, comprenant les étapes consistant :
- à pourvoir un premier revêtement en métal (12, A) d'au moins une couche coupe-feu (B, C) ;
- à appliquer une couche de mousse isolante (D) sous la forme d'un mélange réactionnel liquide sur la ou les couches coupe-feu (B, C) ; et
- à appliquer un deuxième revêtement en métal (20, A) sur la couche de mousse isolante (D).

4. Un procédé tel que revendiqué dans la revendication 3, dans lequel au moins une couche coupe-feu (B, C) : (a) est appliquée sous la forme d'un mélange réactionnel liquide, ou (b) est appliquée sous forme solide.

5. Un procédé tel que revendiqué dans la revendication 4(a), dans lequel le mélange réactionnel liquide comprend une dispersion dans un mélange réactionnel à base d'isocyanate de graphite expansible.
